# EUROPEAN PATENT SPECIFICATION

(11) **EP 3 005 582 B1**
(45) Date of publication and mention of the grant of the patent: **16.01.2019**
(21) Application number: 13727153.2
(22) Date of filing: 05.06.2013
(51) Int. Cl.: H04B 7/155

(54) **RADIO LINK WITH REPEATER**
FUNKSTRECKE MIT FUNKSTRECKENVERSTÄRKER
LIAISON AVEC DISPOSITIF RÉPÉTEUR AMPLIFICATEUR

(43) Date of publication of application: 13.04.2016
(73) Proprietor: Telefonaktiebolaget LM Ericsson (publ), 164 83 Stockholm (SE)
(72) Inventor: OLSSON, Bengt-Erik, S-43655 Hovås (SE); HANSRYD, Jonas, S-41877 Göteborg (SE)
(74) Representative: Ericsson
(86) International application number: PCT/EP2013/061588
(87) International publication number: WO 2014/194945

(56) References cited:
- US-A- 5 509 028

## Description

### TECHNICAL FIELD

The present invention discloses a point to point radio link chain with one or more repeaters.

### BACKGROUND

Radio links, in particular microwave radio links are an attractive alternative to optical fiber for the transmission of electromagnetic signals. One reason for this attractiveness is the higher propagation speed offered by microwave radio links, which is due to difference between the speed of light in air and the speed of light in an optical fiber, the difference sometimes being as much as 50%.

Thus, a connection between two microwave radio links will offer a higher propagation speed than a connection by means of optical fiber over the same distance. However, connections by means of microwave radio links suffer from attenuation as a function of distance, which necessitates the use of repeater stations if the connection is to be successful over distances of certain lengths. Repeater stations will introduce imperfections in the signals which they retransmit, thereby degrading the performance of the connection.

US5509028A discloses a method in which the spectrum of the radio signals transmitted by the base station to the repeater station is reversed relative to the spectrum of the radio signals retransmitted by the repeater station to the mobile stations.

### SUMMARY

The invention is defined by the independent claims, and preferred embodiments are set out in the dependent claims.

It is an object to obviate at least some of the disadvantages of long-distance microwave point-to-point connections identified above, and to provide an improved point-to-point connection which is particularly useful at microwave frequencies.

This object is obtained by means of a microwave radio link chain which comprises a first transmitter, a first receiver and one or more repeaters between the first transmitter and the first receiver, with the one or more repeaters being arranged to receive signals originally transmitted by the first transmitter and to transmit the received signals in the direction of the first receiver. In the microwave radio link chain, one or more of the repeaters is/are arranged to invert the spectrum of the signals before they are transmitted by the repeater.

Since one or more of the repeaters is/are arranged to invert the spectrum of the signals before they are transmitted, the effect that is gained is the following: the impairments caused to a signal by a repeater are often linearly frequency-dependent, which means that if a number of frequency inverting repeaters are used, the impact of the repeaters will be "self healing" in that the impairments caused by the repeaters will be evened out over the spectrum. If, in "a minimum embodiment", only one inverting repeater is used, this will serve to mitigate impairments caused on either side of the inverter in the microwave radio link chain, since impairments which will be caused to the signal after the inverter will be "pre-empted" by the frequency inversion which is caused in the inverting repeater.

In examples of the microwave radio link chain, one or more of the repeaters is also arranged to amplify the received signals before they are transmitted.

In examples of the microwave radio link chain, one or more repeater is arranged to perform signal processing on the received signal before it is transmitted by the repeater.

In embodiments of the microwave radio link chain, the first receiver is arranged to detect if a received signal has been spectrum-inverted an odd number of times, and if that is the case, to spectrum-invert such received signals.

Optimal results are obtained if all receivers and transmitters in the microwave radio link chain have similar transfer functions. Thus, in embodiments of the microwave radio link chain, two or more repeaters are arranged to transmit the signals by means of transmitter functions which have similar transfer functions, and in embodiments of the microwave radio link chain, at least one repeater is arranged to transmit the signals by means of a transmitter function which has a transfer functions similar to that of the first transmitter. In embodiments of the microwave radio link chain, two or more repeaters are arranged to receive the signals by means of receiver functions which have similar transfer functions, and in embodiments of the microwave radio link chain, at least one repeater is arranged to receive the signals by means of a transmitter function which has a transfer function similar to that of the first receiver.

The object is also obtained by means of a microwave repeater which is arranged to:
- receive microwave signals and,
- to invert the received signals, and
- to transmit the inverted signals.

In examples, the microwave repeater station is arranged to amplify the received microwave signals.

In examples, the microwave repeater station is arranged to perform signal processing on the received microwave signals.
There is also disclosed a method for transmitting a microwave signal from a transmitting radio link to a receiving radio link. The method comprises:
- transmitting the microwave signal from the transmitting radio link,
- receiving the microwave signal in the receiving radio link.
The method also comprises spectrum inverting the transmitted microwave signal at one or more points along a line between the transmitting and the receiving radio link.

In examples, the method further comprises amplifying the transmitted microwave signal at one or more points along a line between the transmitting and the receiving radio link.

In examples, the method further comprises performing signal processing of the transmitted microwave signal at one or more points along a line between the transmitting and the receiving radio link.

In examples, the method further comprises detecting in the receiving radio link if a received microwave signal has been spectrum-inverted an odd number of times, and if that is the case, spectrum-inverting such received microwave signals.

### BRIEF DESCRIPTION OF THE DRAWINGS

The invention will be described in more detail in the following, with reference to the appended drawings, in which
Fig 1a shows characteristics of a typical repeater, and
Fig 1b shows the impact of multiple repeaters such as the one in fig 1a, and
Fig 2 shows a point to point radio link chain, and
Fig 3 shows a block diagram of a repeater, and
Figs 4a and 4b show frequency spectrum inversion, and
Fig 5 shows a principle of an inversion operation, and
Fig 6 shows a schematic flow chart of a method for transmitting a signal along a microwave radio link chain.

### DETAILED DESCRIPTION

Embodiments of the present invention will be described more fully hereinafter with reference to the accompanying drawings, in which embodiments of the invention are shown. The invention may, however, be embodied in many different forms and should not be construed as being limited to the embodiments set forth herein. Like numbers in the drawings refer to like elements throughout.

The terminology used herein is for the purpose of describing particular embodiments only, and is not intended to limit the invention.

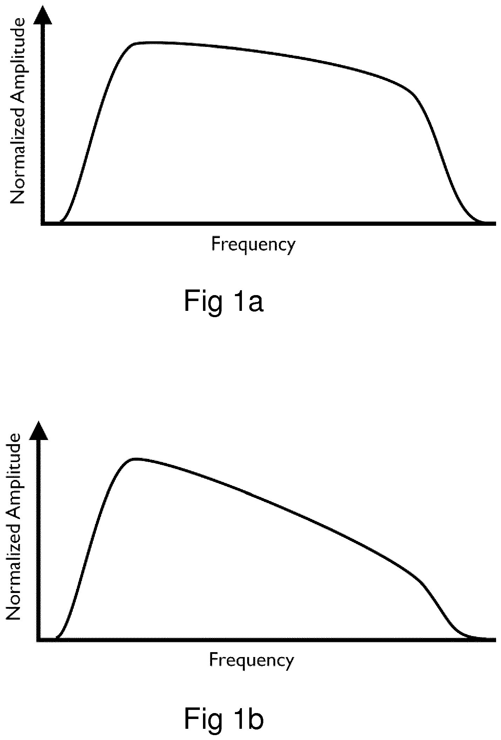

Fig 1a shows a graph of the amplitude response of a typical microwave repeater. As can be seen, signals at higher frequencies are affected more by attenuation than signals at lower frequencies, which is also true for the delay response of such a repeater, although this is not shown in fig 1a. The impact on the repeater on the amplitude and delay of the signal is mainly linear with increasing frequency. However, impairments to the signal which are nonlinear with respect to frequency may also be mitigated by the spectrum-inverting repeater(s) described herein.

If a signal is passed through a multitude of repeaters with characteristics such as those shown in fig 1a, the impact on the signal will be quite high, due to the cumulative impact of the repeaters. In order to illustrate this, fig 1b shows a graph of the amplitude characteristics of a signal which has been passed through a large number of repeaters which have the characteristics shown in fig 1a. An example of a large number in this context is three.

A principle used in the microwave radio link chain disclosed herein is to invert the spectrum of the signal which is received in one or more of the repeaters in a microwave radio link chain. By means of such inverting repeaters, the signal impairments caused by preceding repeaters and/or by a transmitter from which the signals originate will be reversed, and the microwave radio link chain will become "self healing" with respect to the signal impairments caused by the repeaters and/or the original transmitter.

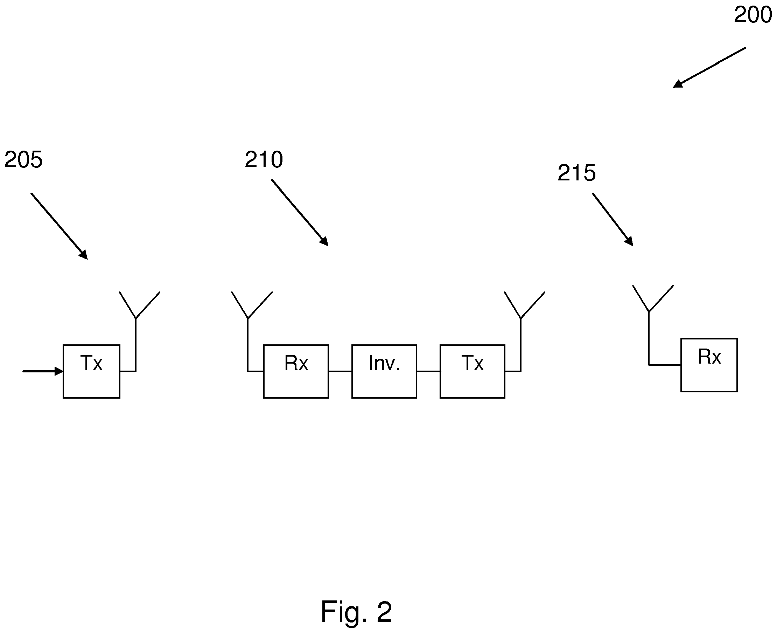

Fig 2 shows a microwave radio link chain 200 with a first transmitter 205, a first repeater 210 and a receiver 215. Naturally, the number of repeaters can be varied; the microwave radio link chain of fig 2 is shown with only one repeater for reasons of brevity and simplicity. Thus, the first transmitter 205 transmits signals which are received by the repeater 210, which inverts the spectrum of the signals and in embodiments amplifies them, and then transmits them towards the first receiver 215. As is shown in fig 2, the repeater 210 comprises a receiver, "Rx", an inverter, "Inv", and a transmitter, "Tx". In this context, it can be pointed out that if the repeater comprises an amplifying function as well as the function of spectrum inversion, the spectrum inversion can be carried out before or after the amplification, and in addition, either or both of the receiver and the transmitter of the repeater may be arranged to amplify the signal. In addition, the repeater 210 can of course be arranged to perform functions other than those shown in fig 2, e.g. signal processing. In addition, in embodiments, the receiver "Rx" of the repeater 210 can in embodiments be as simple as a connection between a receiving antenna and the inverter of the repeater 210, while in other embodiments, as will be described in more detail below, the receiver "Rx" of the repeater 210 can be more advanced.

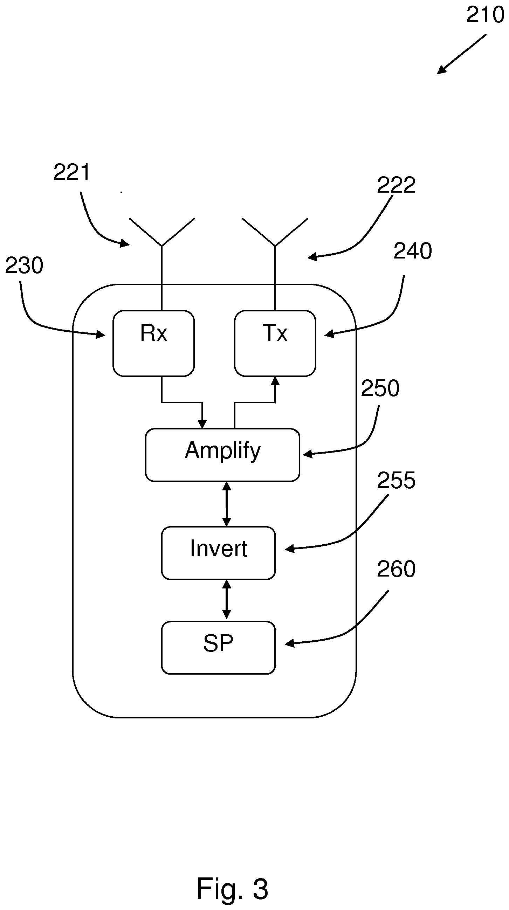

Fig 3 shows a schematic block diagram of a repeater such as the one 210 in fig 2. However, the repeater 210 is in fig 3 shown with some blocks which are not shown in fig 2, for reasons which will be explained below.

As shown in fig 3, the repeater 210 comprises a transmit antenna 222 and a receive antenna 221. However, in some embodiments, one and the same physical antenna unit can be used as both receive and transmit antenna. In embodiments, the repeater 210 also comprises a receive unit 230. If a receive unit 230 is comprised in the repeater 210, the receive unit is suitably used for shifting the frequency of the received signal to another frequency, which can be done as follows: a receive unit 230 suitably comprises a mixer for "down conversion" of the received signal's frequency to a lower frequency, a so called intermediate frequency, IF frequency. The IF frequency is then suitably converted into a transmit frequency, "up conversion" by means of another mixer, or possibly by means of the same mixer that was used for the down-conversion.

The repeater 210 also comprises an inverting unit 255 which inverts the spectrum of its input signals, and thus outputs a signal which has an inverted spectrum as compared to the signal that was input to the inverting unit 255. In embodiments, the repeater 210 also comprises an amplifier unit 250, which, as the name implies, amplifies an input signal and outputs an amplified signal.

Regarding the amplifying unit 250 and the amplification in the repeater 210 in general, the following can be said: although the amplifier unit 250 is shown in fig 3 as preceding the inverting unit 255 when it comes to receiving signals, so that received signals will first be amplified and then have their spectrum inverted, the opposite principle can also be used, i.e. the signals in the repeater 210 can also have their frequency spectrum inverted first and then be amplified. In addition to this, as mentioned above, both the receive unit 230 and the transmit unit 240 are in embodiments also equipped with amplifiers. In embodiments, such amplifiers are used instead of a separate amplifier unit 250, while in other embodiments they are complements to a separate amplifier unit 250.

If the repeater 210 is not equipped with a separate receiving unit 230, the receive antenna 221 may be connected directly to the amplifier unit 250 or to the inverter unit 255.

As shown in fig 3, the repeater 210 can also, in embodiments, comprise a signal processing unit SP 260. The signal processing performed in the signal processing unit SP 260 can be of various kinds, for which reason the unit is referred to generically as a "signal processing unit". However, examples of signal processing which the signal processing unit 260 may be arranged to performed include one or more of the following:
- regeneration of the received signals.
- channel equalization,
- mitigation of phase noise,
- spectrum shaping,

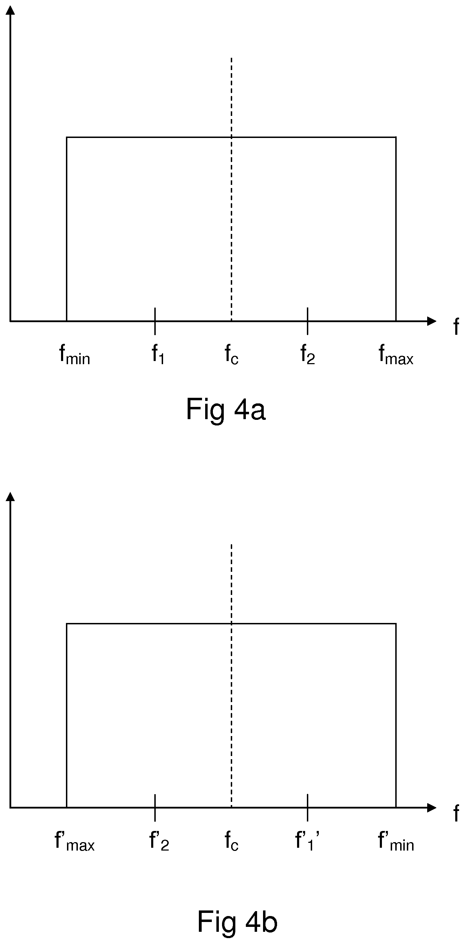

Returning now to the inverting unit 255, the function of this unit is as follows: the term "inverting a frequency spectrum" is here used in the sense that is also shown in figs 4a and 4b: as shown in fig 4a, a signal comprises a frequency spectrum that ranges from a lowest frequency fₘᵢₙ to a highest frequency fₘₐₓ, with the spectrum being centered about a centre frequency f_{c}. Two intermediate frequencies f₁ and f₂ are also shown in fig 4a, i.e. intermediate in the sense that they are positioned at respective distances halfway between fₘᵢₙ/fₘₐₓ and f_{c}.

In fig 4b, the frequency spectrum of fig 4a has been inverted, i.e. the frequencies in the spectrum fₘᵢₙ-fₘₐₓ are mirrored about the frequency spectrum's centre frequency f_{c}, so that signal components which in fig 4a are found to the right of f_{c} at a certain distance from f_{c} are in fig 4b found to the left of f_{c} at a distance from f_{c} which is the same as they had prior to the spectrum inversion, and the same is true for signal components which in fig 4a are found to the left of f_{c}, i.e. they are in fig 4b found to the right of f_{c} at a distance from f_{c} which is the same as they had prior to the spectrum inversion. The "new" signal components in fig 4b are indicted by means of a "prime" sign, e.g. the "new" lowest frequency in fig 4b is shown as f'ₘₐₓ, in order to indicate that this is the signal component which was previously found at fₘₐₓ.

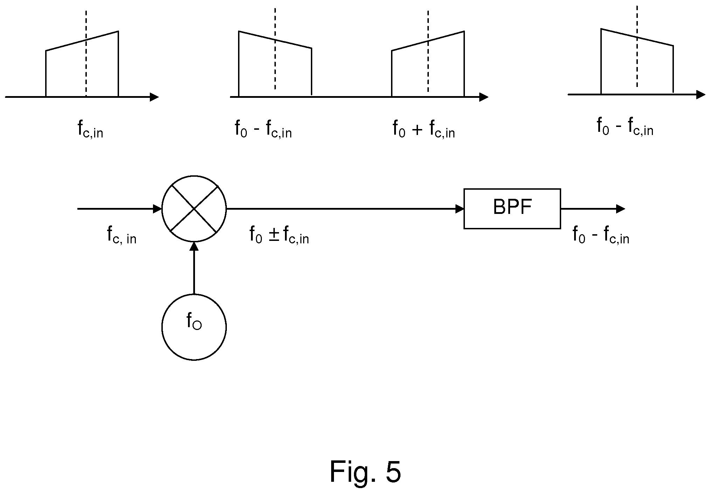

The function of spectrum inversion, i.e. the function of the unit 255 of fig 2 can be accomplished in a number of ways; one such way will be described here with reference to fig 5. In fig 5, an input signal with a spectrum centered about an input centre frequency f_{c,in}, is shown, and in order to illustrate the concept of signals which have been impaired along a transmission chain, the input signal is shown with a slightly "slanted" spectrum, i.e. signals with a lower frequency have an amplitude which is lower than signals at a higher frequency. This slant is then shown throughout the chain, in order to illustrate that the signals are or are not inverted.

As show in fig 5, the spectrum inverting function of the unit 255 is here accomplished by means of multiplying the input signal by a signal at a frequency f₀. The multiplication takes place in a so called "mixer", and produces two signals, a "sum signal" at frequency f₀+f_{c} and a "difference signal" f₀-f_{c,in}, with the sum and difference signals being each other's inverses, which can also be expressed as saying that one of the signals is the inverse of the input signal. In this case it is the difference signal f_{c,in}-f₀ which is the inverse of the input signal. As can be seen, in this particular embodiment, the inverse of the input signal, i.e. the difference signal, is centered about a different centre frequency than the input signal, but the signal bandwidth is the same. If it is desired to maintain the same centre frequency as the input signal had, the inverse, i.e. the difference signal, can be moved to accomplish this, for example by means of a further mixer.

Since one of the signals produced in the mixer can be seen as the inverse of the input signal, in order to achieve the inversion of the frequency spectrum of the input signal, the signal (sum/difference) which is the inverse of the input signal is preserved as the output signal of the inverting unit 255 by means of a filter, suitably a band-pass filter, BPF, which only admits the inverted signal, in this case the difference signal f_{c,in}-f₀ and rejects the other signal, in this case the "sum signal" f_{c,in}+f₀. Naturally, if it is desired not to invert the input signal, the BPF can be designed to only admit the noninverted signal, or the BPF can be tunable, so that either effect can be achieved, as desired at any particular moment.

In addition to using a tunable filter to select the desired signal, i.e. either fᵢₙ+f₀ or fᵢₙ-f₀, the desired inversion function can be achieved by means of using a BPF with a set transfer function, in which case the multiplication frequency f₀ can be adaptively chosen to place the desired component (sum/difference) within the pass-band of the BPF. The control of f₀ is suitably performed by means of software, which senses/detects the frequency f_{c,in}, and sets f₀ accordingly, in order to achieve the desired function.

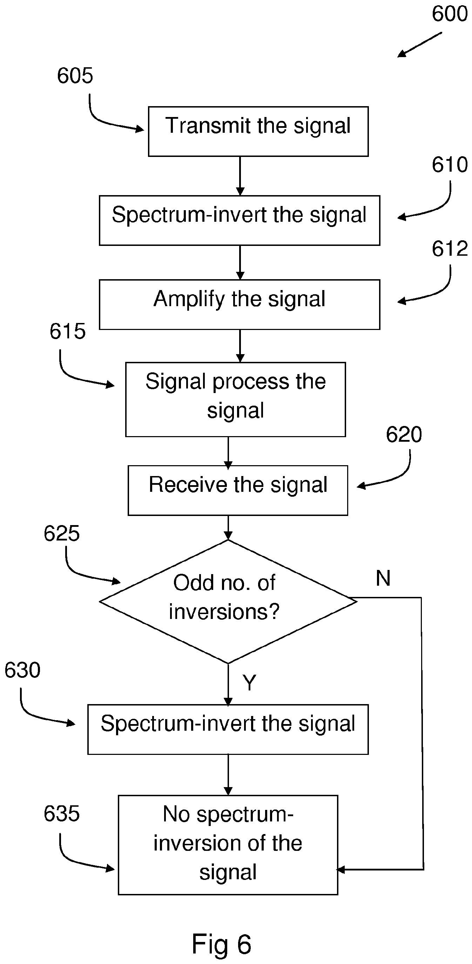

Fig 6 shows a schematic flow chart of a method 600 for transmitting a microwave signal from a transmitting radio link to a receiving radio link. The method 600 comprises:
- transmitting, step 605, the microwave signal from the transmitting radio link,
- receiving, step 620, the microwave signal in the receiving radio link.

The method 600 also comprises, step 610, spectrum inverting the transmitted microwave signal at one or more points along a line between the transmitting and the receiving radio link.

In embodiments of the method 600, there is further comprised, step 612, amplifying the transmitted microwave signal at at least one of said one or more points.

In embodiments of the method 600, there is further comprised, step 615, performing signal processing of the transmitted microwave signal at at least one of said one or more points.

In embodiments of the method 600, there is further comprised, step 625, detecting in the receiving radio link if a received microwave signal has been spectrum-inverted an odd number of times, and if that is the case, step 630, spectrum-inverting such received microwave signals. If a received microwave signal has not been spectrum-inverted an odd number of times, then, step 635, there is no spectrum-inversion of the received microwave signal performed in the receiver. The reason for wanting to detect if a received microwave signal has been spectrum-inverted an odd number of times, and if that is the case, to "correct" the spectrum, is that in some embodiments, it may be beneficial to use a received microwave signal which exactly corresponds to the transmitted signal.

In the drawings and specification, there have been disclosed exemplary embodiments of the invention. However, many variations and modifications can be made to these embodiments without substantially departing from the principles of the present invention. Accordingly, although specific terms are employed, they are used in a generic and descriptive sense only and not for purposes of limitation.

The invention is not limited to the examples of embodiments described above and shown in the drawings, but may be freely varied within the scope of the appended claims.

## Claims

1. A microwave radio link chain (200) comprising a first transmitter (205), a first receiver (215) and one or more repeaters (210) between the first transmitter (205) and the first receiver (215), the one or more repeaters (210) being arranged to receive (221) signals originally transmitted by the first transmitter (205) and to transmit (222, 240) the received signals in the direction of the first receiver (215), the microwave radio link chain (200) being **characterized in that** one or more of said repeaters (210) is arranged to invert (255) the spectrum of the signals before they are transmitted by the repeater, and the first receiver (215) is arranged to detect if a received signal has been spectrum-inverted an odd number of times, and if that is the case, to spectrum-invert such received signals.

2. The microwave radio link chain of claim 1, in which two or more repeaters are arranged (240) to transmit the signals by means of transmitter functions which have similar transfer functions.

3. The microwave radio link chain of any of claims 1-2, in which at least one repeater is arranged (240) to transmit the signals by means of a transmitter function which has a transfer functions similar to that of the first transmitter.

4. The microwave radio link chain of any of claims 1-3, in which two or more repeaters are arranged (240) to receive the signals by means of receiver functions which have similar transfer functions.

5. A method (600) for transmitting a microwave signal from a radio transmitter (205) via one ore more repeaters (210) to a radio receiver (215), the method (600) comprising:
• transmitting (605) the microwave signal from the radio transmitter (205),
• receiving (620) the microwave signal in the radio receiver (215), the method (600) being **characterized in that** it also comprises spectrum inverting (610) the transmitted microwave signal at one or more points along a line between the radio transmitter (205) and the radio receiver (215),
• detecting (625) if a received microwave signal has been spectrum-inverted an odd number of times, and if that is the case, spectrum-inverting such received microwave signals.

## Patentansprüche

1. Mikrowellenfunkverbindungskette (200), umfassend einen ersten Sender (205), einen ersten Empfänger (215) und einen oder mehrere Repeater (210) zwischen dem ersten Sender (205) und dem ersten Empfänger (215), wobei der eine oder die mehreren Repeater (210) so ausgelegt sind, dass sie Signale, die ursprünglich durch den ersten Sender (205) gesendet werden, empfangen (221) und die empfangenen Signale in Richtung des ersten Empfängers (215) senden (222, 240), die Mikrowellenfunkverbindungskette (200) **dadurch gekennzeichnet ist, dass** der eine oder die mehreren Repeater (210) so ausgelegt sind, dass sie das Spektrum der Signale invertieren (255), bevor sie durch den Repeater gesendet werden, und der erste Empfänger (215) so ausgelegt ist, dass er erkennt, ob das Spektrum eines empfangenen Signals eine ungerade Anzahl von Malen invertiert wurde, und, wenn dies der Fall ist, das Spektrum solcher empfangener Signale invertiert.

2. Mikrowellenfunkverbindungskette nach Anspruch 1, in welcher zwei oder mehr Repeater (240) zum Senden der Signale mittels Senderfunktionen angeordnet sind, die ähnliche Übertragungsfunktionen aufweisen.

3. Mikrowellenfunkverbindungskette nach einem der Ansprüche 1 bis 2, in welcher mindestens ein Repeater (240) zum Senden der Signale mittels einer Senderfunktion angeordnet ist, die eine Übertragungsfunktion aufweist, die der des ersten Senders ähnelt.

4. Mikrowellenfunkverbindungskette nach Anspruch 1 1, in welcher zwei oder mehr Repeater (240) zum Empfangen der Signale mittels Empfängerfunktionen angeordnet sind, die ähnliche Übertragungsfunktionen aufweisen.

5. Verfahren (600) zum Senden eines Mikrowellensignals von einem Funksender (205) über einen oder mehrere Repeater (210) an einen Funkempfänger (215), wobei das Verfahren (600) umfasst:
• Senden (605) des Mikrowellensignals vom Funksender (205),
• Empfangen (620) des Mikrowellensignals im Funkempfänger (215),
wobei das Verfahren (600) **dadurch gekennzeichnet ist, dass** es außerdem ein Invertieren des Spektrums (610) des gesendeten Mikrowellensignals an einem oder mehreren Punkten entlang einer Leitung zwischen dem Funksender (205) und dem Funkempfänger (215) umfasst,
• Erkennen (625), ob das Spektrum eines empfangenen Mikrowellensignals eine ungerade Anzahl von Malen invertiert wurde, und, wenn dies der Fall ist, Invertieren des Spektrums solcher empfangener Mikrowellensignale.

## Revendications

1. Chaîne de liaison radio à micro-ondes (200) comprenant un premier émetteur (205), un premier récepteur (215) et un ou plusieurs répéteurs (210) entre le premier émetteur (205) et le premier récepteur (215), l'un ou plusieurs répéteurs (210) étant agencés pour recevoir (221) des signaux initialement transmis par le premier émetteur (205) et transmettre (222, 240) les signaux reçus en direction du premier récepteur (215), la chaîne de liaison radio à micro-ondes (200) étant **caractérisée en ce qu'**un ou plusieurs desdits répéteurs (210) sont agencés pour inverser (255) le spectre des signaux avant leur transmission par le répéteur, et le premier récepteur (215) est agencé pour détecter si un signal reçu a subi une inversion de spectre un nombre impair de fois, et, si tel est le cas, inverser le spectre de tels signaux reçus.

2. Chaîne de liaison radio à micro-ondes selon la revendication 1, dans laquelle au moins deux répéteurs sont agencés (240) pour transmettre les signaux au moyen de fonctions d'émetteur ayant des fonctions de transfert similaires.

3. Chaîne de liaison radio à micro-ondes selon la revendication 1 ou 2, dans laquelle au moins un répéteur est agencé (240) pour transmettre les signaux au moyen d'une fonction d'émetteur ayant des fonctions de transfert similaires à celles du premier émetteur.

4. Chaîne de liaison radio à micro-ondes selon l'une quelconque des revendications 1 à 3, dans laquelle au moins deux répéteurs sont agencés (240) pour recevoir les signaux au moyen de fonctions de récepteur ayant des fonctions de transfert similaires.

5. Procédé (600) de transmission d'un signal à micro-ondes depuis un émetteur radio (205) par l'intermédiaire d'un ou plusieurs répéteurs (210) à destination d'un récepteur radio (215), le procédé (600) comprenant :
• la transmission (605) du signal à micro-ondes depuis l'émetteur radio (205),
• la réception (620) du signal à micro-ondes dans le récepteur radio (215),
le procédé (600) étant **caractérisé en ce qu'**il comprend également l'inversion de spectre (610) du signal à micro-ondes transmis à un ou plusieurs points le long d'une ligne entre l'émetteur radio (205) et le récepteur radio (215),
• la détection (625) si un signal à micro-ondes reçu a subi une inversion de spectre un nombre impair de fois, et, si tel est le cas, l'inversion du spectre de tels signaux à micro-ondes reçus.
